# EUROPEAN PATENT APPLICATION

(11) **EP 2 650 512 A2**
(43) Date of publication of application: **16.10.2013**
(21) Application number: 13162433.0
(22) Date of filing: 05.04.2013
(51) Int. Cl.: F02C 6/18

(54) **A method and system for controlling a powerplant during low-load operations**

(30) Priority: 12.04.2012 US 201213444918
(71) Applicant: General Electric Company, Schenectady, New York 12345 (US)
(72) Inventor: Wichmann, Lisa Anne, Greenville, SC 29615 (US); Butkiewicz, Jeffrey John, Greenville, SC 29615 (US); Simpson, Stanley Frank, Greenville, SC 29615 (US)
(74) Representative: Cleary, Fidelma

(57) **Abstract**

The present invention provides a system and method of operating a combined-cycle powerplant at part-load without shutting down an HRSG 110 and steam turbine 265. The present invention may apply to a powerplant operating in an open-cycle mode. The present invention may also apply to a powerplant operating in a closed-cycle mode.

## Description

The present application relates generally to a combined cycle powerplant, and more particularly to, a system and method for operating the powerplant when base-load output is not desired.

In an air-ingesting turbomachine, compressed air and fuel are mixed and combusted to produce a high energy fluid (hereinafter "working fluid") that is directed to a turbine section. The working fluid interacts with turbine buckets to generate mechanical energy. These buckets rotate a shaft coupled to the load, such as an electrical generator. The shaft rotation induces current in a coil electrically coupled to an external electrical circuit. In the case where the turbomachine is part of a combined cycle power plant, the high energy fluids exiting the turbine section are directed to a heat recovery steam generator (HRSG). Here heat from the working fluid is transferred to water for steam generation.

The combustion process creates undesirable emissions and/or pollutants, such as Carbon Monoxide (CO) and Oxides of Nitrogen (NOx). Reducing these pollutants is necessary for environmental and/or regulatory reasons. Some turbomachines incorporate exhaust gas recirculation (EGR) processes help to reduce these pollutants.

Stoichiometric EGR (S-EGR) is a form of EGR where the combustion process consumes a supplied oxidant. The oxidant can include, for example, air or an oxygen source. In an S-EGR system, only enough oxidant is supplied to the combustion system to achieve complete combustion, on a mole basis. The S-EGR process can be configured to yield an exhaust stream that is substantially oxygen-free and includes a relatively high concentration of a desirable gas.

Although power plants normally operate at base-load, there are scenarios when there is not a demand for base-load output. Therefore, there is a desire for a method and system of operating the powerplant at part-load, where base-load output is not desired. As used herein, part-load is synonymous with low-load.

Certain embodiments commensurate in scope with the originally claimed invention are summarized below. These embodiments are not intended to limit the scope of the claimed invention, but rather these embodiments are intended only to provide a brief summary of possible forms of the invention. Indeed, the invention may encompass a variety of forms that may be similar to or different from the embodiments set forth below.

In accordance with a first embodiment of the present invention, a system comprising: a compressor comprising a compressor inlet and a compressor outlet; at least one combustion system that operatively generates a working fluid and comprises a head end and a discharge end, wherein the at least one combustion system is fluidly connected to a first fuel supply and the compressor outlet; a primary turbine section mechanically connected to the compressor, wherein the turbine section comprises a PT_inlet which receives the working fluid from the at least one combustion system, and a PT_outlet that discharges the working fluid; an HRSG fluidly connected to the PT_outlet, wherein the HRSG receives the working fluid, generates steam, and discharges the steam through a steam discharge; and a process coupled to the steam discharge of the HRSG, wherein the process receives the steam generated by the HRSG and comprises a steam turbine that further comprises at least two sections, wherein a first section comprises a first shaft and a second section comprises a section shaft and a clutch that operatively connects the first shaft and the second shaft.

In accordance with a second embodiment of the present invention, a method comprising :operating a compressor to compress an ingested airstream; passing to at least one combustion system: a compressed airstream, deriving from the compressor; delivering a fuel to the at least one combustion system which operatively combusts a mixture of: the fuel, and the compressed airstream; creating the working fluid; passing the working fluid from the at least one combustion system to a primary turbine section; and to an HRSG fluidly connected to the at least one combustion system , wherein the HRSG receives the working fluid, generates steam, and discharges the steam through a steam discharge; and operating a process that is fluidly coupled to the steam discharge of the HRSG, wherein the process receives the steam generated by the HRSG and comprises a steam turbine that further comprises at least two sections, wherein a first section comprises a first shaft and a second section comprises a section shaft and a clutch that operatively connects the first shaft and the second shaft; wherein the method operatively increases a turndown range of a powerplant.

These and other features, aspects, and advantages of the present invention may become better understood when the following detailed description is read with reference to the accompanying figures (FIGS) in which like characters represent like elements/parts throughout the FIGS.
FIG 1 is a simplified schematic of a standard gas turbine operating in an open-cycle mode, illustrating a first embodiment of the present invention.
FIG 2 is a simplified schematic of a standard gas turbine operating in a closed-cycle mode, illustrating a second embodiment of the present invention.
FIG 3 is a simplified schematic of a reheat gas turbine operating in a closed-cycle mode, illustrating a third embodiment of the present invention.
FIG 4 is a simplified schematic of a reheat gas turbine operating in a closed-cycle mode, illustrating a fourth embodiment of the present invention.
FIG 5 is a simplified schematic of a reheat gas turbine operating in a closed-cycle mode, illustrating a fifth embodiment of the present invention.

One or more specific embodiments of the present invention will be described below. In an effort to provide a concise description of these embodiments, all features of an actual implementation may not be described in the specification. It should be appreciated that in the development of any such actual implementation, as in an engineering or design project, numerous implementation-specific decisions are made to achieve the specific goals, such as compliance with system-related and/or business-related constraints, which may vary from one implementation to another. Moreover, it should be appreciated that such effort might be complex and time consuming, but would nevertheless be a routine undertaking of design, fabrication, and manufacture for those of ordinary skill having the benefit of this disclosure.

Detailed example embodiments are disclosed herein. However, specific structural and functional details disclosed herein are merely representative for purposes of describing example embodiments. Embodiments of the present invention may, however, be embodied in many alternate forms, and should not be construed as limited to only the embodiments set forth herein.

Accordingly, while example embodiments are capable of various modifications and alternative forms, embodiments thereof are illustrated by way of example in the figures and will herein be described in detail. It should be understood, however, that there is no intent to limit example embodiments to the particular forms disclosed, but to the contrary, example embodiments are to cover all modifications, equivalents, and alternatives falling within the scope of the present invention.

The terminology used herein is for describing particular embodiments only and is not intended to be limiting of example embodiments. As used herein, the singular forms "a", "an" and "the" are intended to include the plural forms as well, unless the context clearly indicates otherwise. The terms "comprises", "comprising", "includes" and/or "including", when used herein, specify the presence of stated features, integers, steps, operations, elements, and/or components, but do not preclude the presence or addition of one or more other features, integers, steps, operations, elements, components, and/or groups thereof.

Although the terms first, second, primary, secondary, etc. may be used herein to describe various elements, these elements should not be limited by these terms. These terms are only used to distinguish one element from another. For example, but not limiting to, a first element could be termed a second element, and, similarly, a second element could be termed a first element, without departing from the scope of example embodiments. As used herein, the term "and/or" includes any, and all, combinations of one or more of the associated listed items.

Certain terminology may be used herein for the convenience of the reader only and is not to be taken as a limitation on the scope of the invention. For example, words such as "upper", "lower", "left", "right", "front", "rear", "top", "bottom", "horizontal", "vertical", "upstream", "downstream", "fore", "aft", and the like; merely describe the configuration shown in the FIGS. Indeed, the element or elements of an embodiment of the present invention may be oriented in any direction and the terminology, therefore, should be understood as encompassing such variations unless specified otherwise.

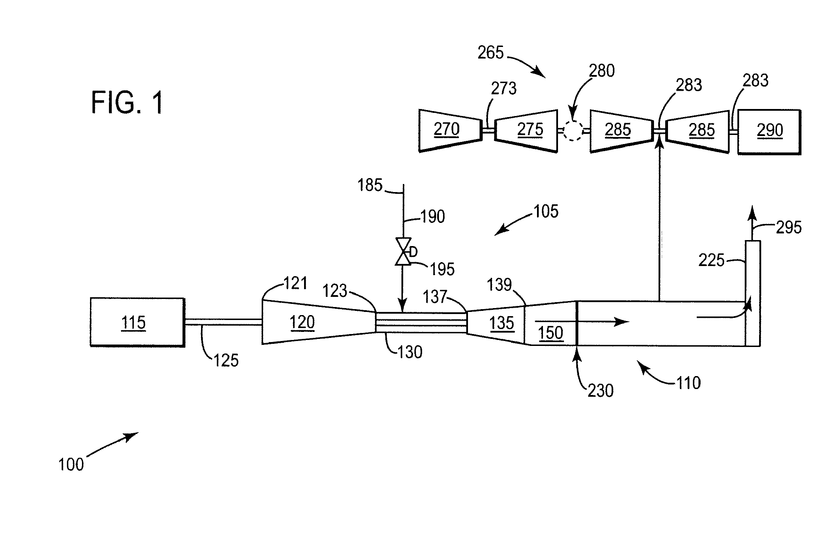

The present invention may be applied to a variety of air-ingesting turbomachines. This may include, but is not limited to, heavy-duty gas turbines, aero-derivatives, or the like. Although the following discussion relates to the gas turbines illustrated in FIGS 1-5, embodiments of the present invention may be applied to a gas turbine with a different configuration. For example, but not limiting of, the present invention may apply to a gas turbine with different, or additional, components than those illustrated in FIGS 1-5.

Referring now to the FIGS, where the various numbers represent like components throughout the several views, FIG 1 is a simplified schematic of a standard gas turbine operating in an open-cycle mode, illustrating a first embodiment of the present invention.

In FIG 1, a site 100 includes: a gas turbine 105, operatively connected to a heat recovery steam generator (HRSG) 110, a load 115, a steam turbine 265, and a load 290. The gas turbine 105 may include a GT compressor 120 having a compressor inlet 121 and a compressor outlet 123. The GT compressor 120 ingests ambient air through the compressor inlet 121, compresses and then discharges the compressed air through the compressor outlet 123. The GT compressor 120 may then deliver the compressed airstream to the primary combustion system 130.

The gas turbine 105 may also include a primary combustion system 130 that receives: the compressed airstream; a fuel supply 185, comprising a first fuel conduit 190 and first fuel valve 195. The primary combustion system 130 combusts those fluids creating a working fluid.

An embodiment of the gas turbine 105, also includes a primary turbine section 135 having a PT_inlet 137 that receives the working fluid from the primary combustion system 130 to which the PT_inlet 137 is fluidly connected. The primary turbine section 135 may include rotating components and stationary components installed alternatively in the axial direction adjacent a rotor 125. The primary turbine section 135 converts the working fluid to a mechanical torque which drives the load 115 (generator, pump, compressor, etc). The primary turbine section 135 may then discharge the working fluid through the PT_outlet 139 to an exhaust section 150 and then to the HRSG 110 via associated conduits, piping, valves, etc.

An embodiment of the HRSG 110 may be fluidly coupled to the PT_outlet 139 of the primary turbine section 135 in a manner where a portion of the working fluid flows therein. The HRSG 110 may be configured to transfer heat from the portion of the working fluid to generate steam for use by a process. The process may include, but is not limited to a steam turbine 265. After flowing through the HRSG 110, the working fluid may discharge through the stack 225. An embodiment of the HRSG 110 may comprise a catalyst 230; which may reduce the levels of NOx, CO, and/or other undesirable emissions.

An embodiment of the steam turbine 265 may comprise an HP section 270, an IP section 275, and a LP section 285, wherein the steam discharge may be fluidly connected to the LP section 285. The configurations of some steam turbines 265 have the HP section 270 and the IP section 275 operatively connected to a first shaft 273; and the LP section 285 may be connected to a second shaft 283. Here, each shaft 273, 283 may allow operation of the HP/IP sections 270, 275 independent from operation of the LP section 285. Other configurations have all sections 270, 275, 285 cooperating in a tandem, or a "single rotor", configuration. Here, a clutch 280 may operatively engage or disengage the first shaft 273 and the second shaft 283. This configuration may allow for operation of just the LP section 285. This may be beneficial in part-load operations. This may also increase the turn-down range of the powerplant.

In use, the first embodiment of the present invention may operate as follows. As the GT compressor 120 delivers compressed ambient air to the primary combustion system 130, the fuel supply 185 delivers a fuel (natural gas, oil, etc) to the primary combustion system 130.

Next, the primary combustion system 130 combusts the mixture of those fluids, creating the working fluid that engages the primary turbine section 135. Next, the working fluid may flow through the exhaust section 150.

During part load operation, after flowing through the HRSG 110, the working fluid may discharge through the stack 225. Concurrently, generated steam enters the LP section 285, for power generation; and the HP and IP sections, to rotate and seal the shaft 273 at a rotational speed less than that of the LP section 285. This is due to the disengagement of the clutch 280. As known in the art, there may be at least one other steam admission conduit that originates at the HRSG 110 and discharges steam into a higher pressure section (HP, IP, or the like) of the steam turbine 265.

An embodiment of the HRSG 110 may be fluidly coupled to the PT_outlet 139 of the primary turbine section 135 in a manner where a portion of the working fluid flows therein. The HRSG 110 may be configured to transfer heat from the portion of the working fluid to generate steam for use by a process. The process may include, but is not limited to a steam turbine 265. After flowing through the HRSG 110, the working fluid may discharge through the stack 225. An embodiment of the HRSG 110 may comprise a catalyst 230; which may reduce the levels of NOx, CO, and/or other undesirable emissions.

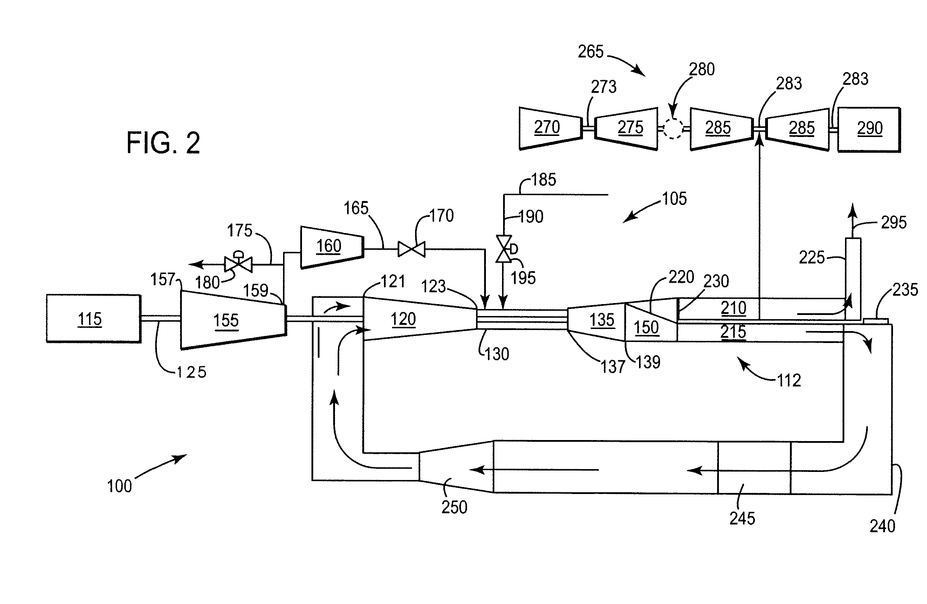

The above discussion, in relation to FIG 1, describes the basic concept of a first embodiment of the present invention. For convenience, components and elements that correspond to those identified in FIG 1 are identified with similar reference numerals in FIGS 2-5, but are only discussed in particular as necessary or desirable to an understanding of each embodiment.

FIGS 2-5 describe embodiments of the present invention that are applied to a site 100 having a gas turbine 105 or a reheat gas turbine 107 in a closed-cycle configuration, specifically - stoichiometric exhaust gas recirculation. The combustion process creates undesirable emissions and/or pollutants, such as Carbon Monoxide (CO) and

Oxides of Nitrogen (NOx). Reducing these pollutants may be necessary for environmental and/or regulatory reasons. Exhaust gas recirculation (EGR) processes help to reduce these pollutants. The following embodiments of the present invention may apply to, but are not limited to, a combined-cycle power plant operating under part-load and stoichiometric-EGR (S-EGR) conditions. Stoichiometric conditions may be considered operating a combustion process with only enough oxidizer, such as, but not limited to, air, to promote complete combustion. Complete combustion bums a hydrocarbon-based fuel with oxygen and yields carbon dioxide and water as the primary byproducts. Many factors may influence whether complete combustion occurs. These may include, but are not limited to, oxygen in proximity to a fuel molecule, vibrations, dynamic events, shock waves, etc. In order to promote carbon dioxide formation rather than carbon monoxide formation, additional oxygen may be delivered with the fuel supply to promote a complete combustion reaction.

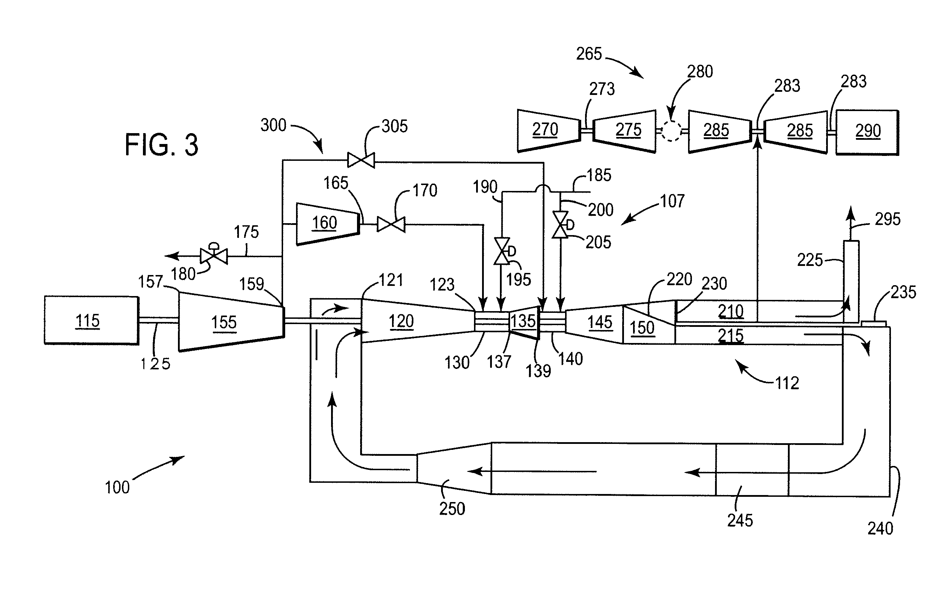

The fuel supply 185, in accordance with embodiments illustrated in FIGS 3-5, may provide fuel that derives from a single source to the primary and secondary combustion systems 130,140. Alternatively, the fuel supply 185 may provide fuel that derives from a first fuel source to either the primary or secondary combustion system 130,140; and fuel that derives from a second fuel source to the other combustion system 130,140.

FIGS 2-5 illustrate embodiments of the present invention integrated with a split-HRSG 112 and an EGR damper 235. However, embodiments of the present invention are not limited to those having a split-HRSG 112. Embodiments of the present invention may also apply to configurations that do not incorporate a split-HRSG and an extraction therefrom.

The split-HRSG 112 may comprise a first section 210, a second section 215, and a HRSG damper 220 that divides the total working fluid between each section 210, 215. Here, the desired output of the load 290, may determine the flow split between sections 210, 215. In a S-EGR application, the mass flow between the sections is based on the flow required by the GT compressor 120. When the flows from the GT compressor 120, oxidant compressor 155, and the fuel supply 185 are combined, then the resulting flow (matched with a firing temperature) generally produces the appropriate output. The split-HRSG 112 may allow for a desired mass balance among the various components of the site 100.

Referring again to the figures, FIG 2 is a simplified schematic of a standard gas turbine 105 operating in a closed-cycle mode, illustrating a second embodiment of the present invention. In FIG 2, a site 100 includes: a gas turbine 105, operatively connected to a split-HRSG 112, a load 115, a steam turbine 265, and a load 290. The gas turbine 105 may include a GT compressor 120 having a compressor inlet 121 and a compressor outlet 123. The GT compressor 120 ingests recirculated exhaust gases (hereinafter "working fluid") received from the EGR system 240, compresses the working fluid, and discharges the compressed working fluid through the compressor outlet 123. The gas turbine 105 may include an oxidant compressor 155 that ingests an oxidant, such as ambient air, through an ac_inlet 157, compresses the same, and discharges the compressed air through the ac_outlet 159. The oxidant compressor 155 may deliver the compressed airstream to the primary combustion system 130 through an airstream conduit 165; which may include: a vent conduit 175, a vent valve 180, booster compressor 160 and isolation valve 170; each of which may be operated as needed. The airstream conduit 165 may include a booster compressor 160 which may operationally assist with delivering the compressed airstream to the primary combustion system 130 at a desired pressure and/or flowrate.

In embodiments of the present invention, the GT compressor 120 operates independent of the oxidant compressor 155. The gas turbine 105 also includes a primary combustion system 130 that receives (through a head end): the compressed working fluid from the GT compressor outlet 123; a fuel supply 185, comprising a first fuel conduit 190 and first fuel valve 195; and the compressed oxidant from the airstream conduit 165 (in an amount sufficient for stoichiometric combustion). The primary combustion system 130 combusts those fluids creating the working fluid, which may be substantially oxygen-free, that exits the combustion system through a discharge end.

An embodiment of the gas turbine 105 also includes a primary turbine section 135 having a PT_inlet 137 that receives substantially all of the working fluid from the primary combustion system 130 of which the PT_inlet 137 is fluidly connected. The primary turbine section 135 is fluidly connected to the primary combustion system 130 from where the working fluid is received from the discharge end of the primary combustion system 130. The primary turbine section 135 may include rotating components and stationary components installed alternatively in the axial direction adjacent a rotor 125. The primary turbine section 135 converts the working fluid to a mechanical torque which drives the load 115 (generator, pump, compressor, etc). The primary turbine section 135 may then discharge the working fluid through the PT_outlet 139 to an exhaust section 150 and then to the split-HRSG 112 via associated conduits, piping, valves, etc.

The split-HRSG 112 may comprise a first section 210, a second section 215, and a HRSG damper 220 that apportions the total working fluid between each section 210,215. An embodiment of the first section 210 may be fluidly coupled to the PT_outlet 139 of the primary turbine section 135 in a manner where a portion of the working fluid flows therein. The first section 210 may be configured to transfer heat from the portion of the working fluid to generate steam for use by a process. The process may include, but is not limited to a steam turbine 265. After flowing through the first section 210, the working fluid may discharge through the stack 225. An embodiment of the first section 210 may comprise a catalyst 230; which may reduce the levels of NOx, CO, and/or other undesirable emissions. An embodiment of the present invention may include a catalyst 230 in the first section 210. An alternate embodiment of the present invention may include a catalyst 230 in the first and second sections 210, 215.

An embodiment of the second section 215 may also be fluidly coupled to the PT_outlet 139 in a manner where the remaining portion of the working fluid flows therein. The second section 215 may operate like the first section 210. Here, the second section 215 may also produce steam from which additional power and/or electricity may be produced. After flowing through the second section 215, the working fluid may discharge into the EGR system 240.

The EGR system 240 operatively returns to the GT compressor 120 the working fluid exiting the second section 215 of the split-HRSG 112. This may cool and moderate the reaction temperature associated with the combustion process. The second section 215 may be fluidly connected to a receiving or upstream end of the EGR system 240. A discharge end of the EGR system 240 may be fluidly connected to the inlet of the GT compressor 120, as described. An embodiment of the EGR system 240 comprises a control device that operatively adjusts a physical property of the working fluid. The control device may have the form of a heat exchanger 245, and/or an EGR compressor 250. As discussed below, embodiments of the EGR system 240 may comprise multiple control devices. The EGR system 240 may also comprise an EGR damper 235 which facilitates a purging process. Also during a part load operation the EGR damper 235 may aid in creating the mass balance of the overall system.

In use, the second embodiment of the present invention may operate as follows. As the oxidant compressor 155 delivers compressed ambient air to the primary combustion system 130, the GT compressor 120 delivers compressed working fluid to the primary combustion system 130. If ambient air at a higher pressure is required, then the booster compressor 160 may be used. The fuel supply 185 nearly simultaneously delivers a hydrocarbon-based fuel (natural gas, or the like) to the primary combustion system 130.

Next, the primary combustion system 130 combusts the mixture of those three fluids, to create the working fluid; which engages the primary turbine section 135. Next, the working fluid may flow through the exhaust section 150. Next, the working fluid may enter the first section 210 and the second section 215 of the split HRSG 112, as described.

After flowing through the first section 210, the working fluid may discharge through the stack 225 as the generated steam enters HP and IP sections 270, 275 and the LP section 285, as described. The remaining portion of the working fluid may enter the EGR system 240; after flowing through the second section 215. Depending on the configuration of the EGR system 240, the working fluid may flow through the heat exchanger 245, where a temperature reduction may occur. Then the working fluid may flow through an EGR compressor 250. Elements 245, 250 serve to adjust the pressure and/or temperature of the working fluid prior to returning to the gas turbine 105 through the GT compressor 120.

An embodiment of the steam turbine 265 may comprise an HP section 270, an IP section 275, and a LP section 285, as described. Operationally, some configurations admit steam to the HP section 270, which is then discharged through the exhaust of the HP section 270 and then to the HRSG 112. Here, mixing with the IP steam and reheating occurs; after which the steam is passed to the IP steam turbine 275. Next, the IP exhaust steam mixes with the LP admission steam and enters the LP steam turbine 285. The configurations of some steam turbines 265 have the HP section 270 and the IP section 275 operatively connected to a first shaft 273; and the LP section 285 may be connected to a second shaft 283. Here, each shaft 273, 283 may allow operation of the HP/IP sections 270,275 independent from operation of the LP section 285. Other configurations have all sections 270,275, 285 cooperating in a tandem, or a "single rotor", configuration. Here, a clutch 280 may operatively engage or disengage the first shaft 273 with the second shaft 283. This configuration may allow for operation of just the LP section 285.

At part load, steam production tends to be biased to LP steam generation. Therefore the clutch 280 may disengage the HP/IP sections 270,275 from the LP steam turbine 285. Here, the LP section 285 rotates at nominal speed. The HP/IP section 270,275 rotates at a lower speed, dependent on the lower HP/IP steam flow from the split HRSG 112. This steam flow may seal the HP and IP sections 270,275. De-coupling the LP section 285 from the HP/IP sections 270,275 may be beneficial in part-load operations and increase the turn down range of the steam turbine 265.

The above discussion, in relation to FIG 2, describes the basic concept of the invention applied to a closed-cycle gas turbine 105. For convenience, components and elements that correspond to those identified in FIG 2 are identified with similar reference numerals in FIGS 3-5, but are only discussed in particular as necessary or desirable to an understanding of each embodiment.

FIG 3 is a simplified schematic of a reheat gas turbine 107 operating in a closed-cycle mode, illustrating a third embodiment of the present invention. The primary difference between this third embodiment and the second embodiment is the application of the present invention to a reheat gas turbine 107. Here, the reheat gas turbine 107 comprises the following additional components (as illustrated in FIG 3): a secondary combustion system 140, a secondary turbine section 145, and a second fuel conduit and valve 200, 205 respectively. Operationally, in this third embodiment, the primary combustion system 130 may, or may not, operate in a substantially stoichiometric mode. However, the secondary combustion system 140 may function as a stoichiometric system.

The embodiment illustrated in FIG 3 also comprises an additional air supply circuit 300 and the isolation valve 305. Here, an upstream end of the air supply circuit 300 may be fluidly connected to the ac_outlet 159 and a downstream end may be connected to the secondary combustion system 140. The additional air supply circuit 300 may be operated and controlled independently from the circuit that supplies the compressed airstream to the primary combustion system 130. This may be considered a dedicated supply of compressed ambient air for the secondary combustion system 140.

Operationally, the steam turbine 265 and the split-HRSG 112 in this third embodiment may operate substantially similar to that of the second embodiment of the present invention.

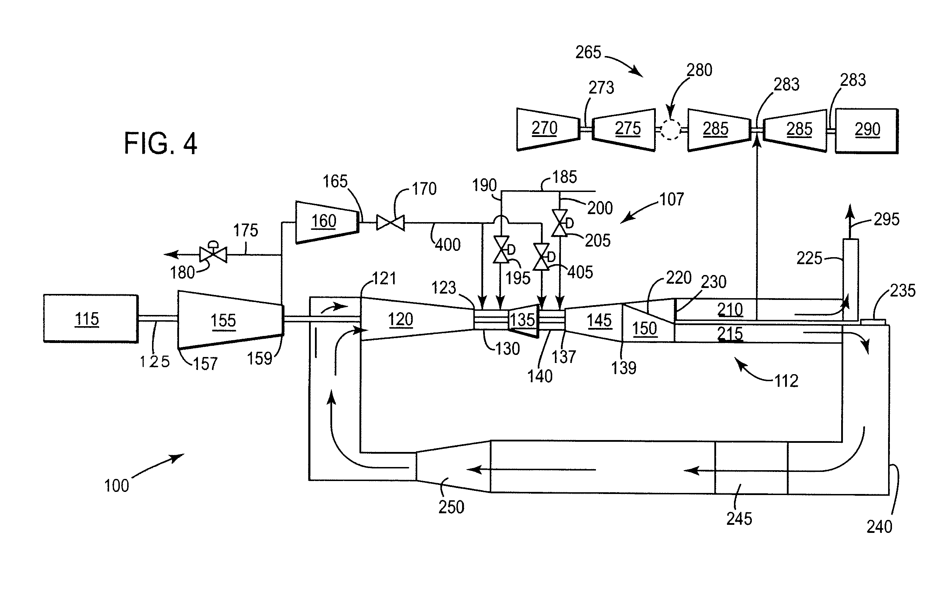

FIG 4 is a simplified schematic of a reheat gas turbine 107 operating in a closed-cycle mode, illustrating a fourth embodiment of the present invention. The primary difference between this fourth embodiment and the third embodiment is the configuration of the air supply circuit 400 and the isolation valve 405. As illustrated in FIG 4, the air supply circuit 400 may be integrated with the circuit that supplies the compressed airstream to the primary combustion system 130. Here, the circuit may be fluidly connected to the ac_outlet 159. A first downstream end may be connected to the primary combustion system 130. A second downstream end may be connected to the reheat combustion system 140.

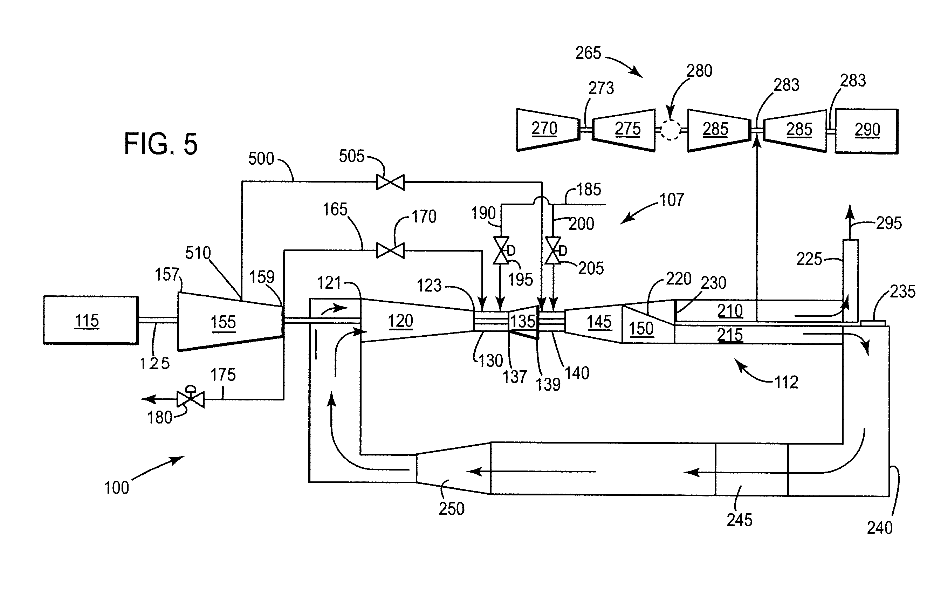

FIG 5 is a simplified schematic of a reheat gas turbine 107 operating in a closed-cycle mode, illustrating a fifth embodiment of the present invention. The primary difference between this fifth embodiment and the fourth embodiment is the configuration of the air supply circuit 500 and the isolation valve 505. Here, the extraction from the oxidant compressor 155 that feeds the air supply circuit 500 may be in a range of the pressure required to supply oxidant to the secondary combustion system 140. Here, the air supply circuit 500 may be an independent circuit that supplies a compressed airstream to the secondary combustion system 140. The circuit 500 may be fluidly connected to an additional ac_outlet 510 on the oxidant compressor 155, as illustrated in FIG 5. A downstream end of the additional air supply circuit 500 may be connected to the secondary combustion system 140.

Although specific embodiments have been illustrated and described herein, those of ordinary skill in the art appreciate that any arrangement, which is calculated to achieve the same purpose, may be substituted for the specific embodiments shown and that the invention has other applications in other environments. This application is intended to cover any adaptations or variations of the present invention. The following claims are in no way intended to limit the scope of the invention to the specific embodiments described herein.

As one of ordinary skill in the art will appreciate, the many varying features and configurations described above in relation to the several embodiments may be further selectively applied to form other possible embodiments of the present invention. Those skilled in the art will further understand that all possible iterations of the present invention are not provided or discussed in detail, even though all combinations and possible embodiments embraced by the several claims below or otherwise are intended to be part of the instant application. In addition, from the above description of several embodiments of the invention, those skilled in the art will perceive improvements, changes, and modifications. Such improvements, changes, and modifications within the skill of the art are also intended to be covered by the appended claims. Further, it should be apparent that the foregoing relates only to the described embodiments of the present application and that numerous changes and modifications may be made herein without departing from the spirit and scope of the application as defined by the following claims and the equivalents thereof.

Various aspects and embodiments of the present invention are defined by the following numbered clauses:
1. A system comprising:
   a compressor comprising a compressor inlet and a compressor outlet;
   at least one combustion system that operatively generates a working fluid and comprises a head end and a discharge end, wherein the at least one combustion system is fluidly connected to a first fuel supply and the compressor outlet;
   a primary turbine section mechanically connected to the compressor, wherein the turbine section comprises a PT_inlet which receives the working fluid from the at least one combustion system, and a PT_outlet that discharges the working fluid;
   an HRSG fluidly connected to the PT_outlet, wherein the HRSG receives the working fluid, generates steam, and is discharged the steam through a steam discharge; and
   a process coupled to the steam discharge of the HRSG, wherein the process receives the steam generated by the HRSG and comprises a steam turbine that further comprises at least two sections, wherein a first section comprises a first shaft and a second section comprises a section shaft and a clutch that operatively connects the first shaft and the second shaft.
2. The system of clause 1, wherein the HRSG comprises a split heat recovery steam generator (HRSG) comprising:
   a. a first portion fluidly coupled to the PT_outlet and operatively receives a portion of the working fluid and generates steam; and
   b. a second portion fluidly coupled to the PT_outlet and operatively receives a remaining portion of the working fluid.
3. The system of clause 1 or clause 2 further comprising a damper connected to the first portion and the second portion, wherein the damper apportions the flow of the working fluid between the first portion and the second portion.
4. The system of any preceding clause further comprising an oxidant compressor comprising an ac_inlet and an ac_outlet; wherein the compressor operates independently of the oxidant compressor.
5. The system of any preceding clause, wherein the at least one combustion system is fluidly connected to an airstream conduit.
6. The system of any preceding clause further comprising an exhaust gas recirculation (EGR) system fluidly connected between a discharge of the second portion of the split-HRSG and the compressor inlet, such that the working fluid exiting the second portion is ingested by the compressor inlet; wherein the EGR system comprises a control device for adjusting a physical property of the working fluid.
7. The system of any preceding clause further comprising a secondary combustion system fluidly connected downstream of the primary turbine section, wherein the secondary combustion system receives fuel from a fuel supply.
8. The system of any preceding clause further comprising a secondary turbine section connected downstream of the secondary combustion system and upstream of the HRSG.
9. The system of any preceding clause wherein the process is coupled to a steam discharge of the first portion of the split-HRSG, wherein the process receives the steam generated by the first portion.
10. The system of any preceding clause, wherein the steam turbine comprises: an HP section, an IP section, and a LP section, wherein a portion of the steam discharge is fluidly connected to the LP section.
11. The system of any preceding clause, wherein the HP section and IP section are connected to a first shaft; and the LP section is connected to a second shaft;
12. The system of any preceding clause further comprising a first airstream conduit fluidly connected between the ac_outlet of the oxidant compressor and the at least one combustion system.
13. The system of any preceding clause, wherein the first airstream conduit comprises a booster compressor fluidly connected downstream of the oxidant compressor.
14. The system of any preceding clause further comprising a second airstream conduit fluidly connected between the ac_outlet of the oxidant compressor and a secondary combustion system.
15. The system of any preceding clause, wherein the first airstream conduit further comprises a circuit fluidly connected downstream at the at least one combustion system and a secondary combustion system.
16. The system of any preceding clause further comprising a second airstream conduit fluidly connected between a second ac_outlet of the oxidant compressor and a secondary combustion system.
17. A method comprising:
   a. operating a compressor to compress an ingested airstream;
   b. passing to at least one combustion system: a compressed airstream, deriving from the compressor;
   c. delivering a fuel to the at least one combustion system which operatively combusts a mixture of: the fuel, and the compressed airstream; creating the working fluid;
   d. passing the working fluid from the at least one combustion system to a primary turbine section; then to an HRSG fluidly connected to the primary turbine section wherein the HRSG receives the working fluid, generates steam, and discharges the steam through a steam discharge; and
   e. operating a process that is fluidly coupled to the steam discharge of the HRSG, wherein the process receives the steam generated by the HRSG and comprises a steam turbine that further comprises at least two sections, wherein a first section comprises a first shaft and a second section comprises a section shaft and a clutch that operatively connects the first shaft and the second shaft.
18. The method of any preceding clause wherein the HRSG comprises a split-HRSG comprising a first portion and a second portion; and operatively:
   a. passes a first portion of the working fluid to the first portion of the HRSG;
   b. passes a remaining portion of the working fluid to the second portion of the HRSG; and
   c. passing the steam generated by the HRSG to a process.
19. The method of any preceding clause further comprising operating an oxidant compressor to compress an ingested oxidant; wherein the operation of the oxidant compressor is independent of the operation of the compressor.
20. The method of any preceding clause further comprising operating an exhaust gas recirculation (EGR) system wherein the EGR system is fluidly connected between a discharge of the second portion of the HRSG and the compressor inlet; such that the working fluid exiting the second portion is ingested by the compressor inlet.
21. The method of any preceding clause, wherein the process comprises a steam turbine comprising: an HP section, an IP section, and a LP section.
22. The method of claim 21 further comprising disengaging the clutch to allow operation of the LP section.
23. The method of claim 21 further comprising engaging the clutch to allow operation of the LP section, HP section, and the IP section.
24. The method of claim 21 further comprising apportioning a majority of the steam flow to the LP section during a low-load operation

## Claims

1. A system comprising:
a compressor (120) comprising a compressor inlet (121) and a compressor outlet (123);
at least one combustion system (130) that operatively generates a working fluid and comprises a head end and a discharge end, wherein the at least one combustion system is fluidly connected to a first fuel supply (185) and the compressor outlet (123);
a primary turbine section (135) mechanically connected to the compressor (120), wherein the turbine section comprises a PT_inlet (137) which receives the working fluid from the at least one combustion system, and a PT_outlet (139) that discharges the working fluid;
an HRSG (110) fluidly connected to the PT_outlet (139), wherein the HRSG receives the working fluid, generates steam, and is discharged the steam through a steam discharge; and
a process coupled to the steam discharge of the HRSG, wherein the process receives the steam generated by the HRSG and comprises a steam turbine (265) that further comprises at least two sections, wherein a first section comprises a first shaft (273) and a second section comprises a section shaft (283) and a clutch (280) that operatively connects the first shaft and the second shaft.

2. The system of claim 1, wherein the HRSG comprises a split heat recovery steam generator (HRSG) comprising:
a. a first portion fluidly coupled to the PT_outlet and operatively receives a portion of the working fluid and generates steam; and
b. a second portion fluidly coupled to the PT_outlet and operatively receives a remaining portion of the working fluid.

3. The system of claim 1 or claim 2 further comprising a damper connected to the first portion and the second portion, wherein the damper apportions the flow of the working fluid between the first portion and the second portion.

4. The system of any preceding claim further comprising an oxidant compressor comprising an ac_inlet and an ac_outlet; wherein the compressor operates independently of the oxidant compressor.

5. The system of any preceding claim, wherein the at least one combustion system is fluidly connected to an airstream conduit.

6. The system of any preceding claim further comprising an exhaust gas recirculation (EGR) system fluidly connected between a discharge of the second portion of the split-HRSG and the compressor inlet, such that the working fluid exiting the second portion is ingested by the compressor inlet; wherein the EGR system comprises a control device for adjusting a physical property of the working fluid.

7. The system of any preceding claim further comprising a secondary combustion system fluidly connected downstream of the primary turbine section, wherein the secondary combustion system receives fuel from a fuel supply.

8. The system of any preceding claim further comprising a secondary turbine section connected downstream of the secondary combustion system and upstream of the HRSG.

9. The system of any preceding claim wherein the process is coupled to a steam discharge of the first portion of the split-HRSG, wherein the process receives the steam generated by the first portion.

10. The system of any preceding claim, wherein the steam turbine comprises: an HP section, an IP section, and a LP section, wherein a portion of the steam discharge is fluidly connected to the LP section.

11. The system of any preceding claim, wherein the HP section and IP section are connected to a first shaft; and the LP section is connected to a second shaft;

12. The system of any preceding claim further comprising a first airstream conduit fluidly connected between the ac_outlet of the oxidant compressor and the at least one combustion system.

13. The system of any preceding claim, wherein the first airstream conduit comprises a booster compressor fluidly connected downstream of the oxidant compressor.

14. A method comprising:
a. operating a compressor to compress an ingested airstream;
b. passing to at least one combustion system: a compressed airstream, deriving from the compressor;
c. delivering a fuel to the at least one combustion system which operatively combusts a mixture of: the fuel, and the compressed airstream; creating the working fluid;
d. passing the working fluid from the at least one combustion system to a primary turbine section; then to an HRSG fluidly connected to the primary turbine section wherein the HRSG receives the working fluid, generates steam, and discharges the steam through a steam discharge; and
e. operating a process that is fluidly coupled to the steam discharge of the HRSG, wherein the process receives the steam generated by the HRSG and comprises a steam turbine that further comprises at least two sections, wherein a first section comprises a first shaft and a second section comprises a section shaft and a clutch that operatively connects the first shaft and the second shaft.

15. The method of claim 14 further comprising apportioning a majority of the steam flow to the LP section during a low-load operation.
